# EUROPEAN PATENT SPECIFICATION

(11) **EP 4 608 767 B1**
(45) Date of publication and mention of the grant of the patent: **11.11.2026**
(21) Application number: 24746373.0
(22) Date of filing: 30.07.2024
(51) Int. Cl.: C01B 3/04

(54) **A PROCESS AND APPARATUS FOR PRODUCING HYDROGEN BY THERMAL REFORMING OF AMMONIA**
VERFAHREN UND VORRICHTUNG ZUR HERSTELLUNG VON WASSERSTOFF DURCH THERMISCHE REFORMIERUNG VON AMMONIAK
PROCÉDÉ ET APPAREIL DE PRODUCTION D'HYDROGÈNE PAR REFORMAGE THERMIQUE D'AMMONIAC

(30) Priority: 31.07.2023 BE 202305632
(43) Date of publication of application: 03.09.2025
(73) Proprietor: Duiker Combustion Engineers B.V., 2292 JK Wateringen (NL)
(72) Inventor: LEMS, Sander, 3218 VR Heenvliet (NL)
(74) Representative: EP&C
(86) International application number: PCT/EP2024/071571
(87) International publication number: WO 2025/027031

(56) References cited:
- WO-A1-2023/016879
- CH-A- 226 226
- KR-B1- 102 538 689
- US-A1- 2018 355 794
- US-A1- 2022 388 841

## Description

### Technical Field

The present invention relates to the production of hydrogen by thermal reforming of ammonia, also referred to as decomposition or cracking. In addition, the present invention relates to the apparatus for the production of hydrogen.

### Background

Global interest in renewable energy has renewed the interest in using ammonia (NH₃) as a suitable hydrogen carrier. Ammonia has a low flammability risk and is readily obtained and handled in liquid form without the need for expensive and complicated refrigeration technology. Ammonia is an energy-dense liquid hydrogen carrier. It contains about 1.7 times as much hydrogen as liquid hydrogen for a given volume in its liquid form; thus allowing for efficient transportation of hydrogen fuel. Ammonia can be decomposed into hydrogen (H₂) and nitrogen (N₂) according to the endothermic reaction:

2 NH₃ → 3H₂ +N₂.

This is an endothermic process, i.e., a process that requires heat, and is performed over a catalyst. This process is known as cracking. The gas so produced ("cracked gas") is a combination of hydrogen (H₂) and nitrogen (N₂). Since the cracking reaction is an equilibrium reaction, there will also be some residual ammonia.

The fundamentals of ammonia reforming, including thermal and photocatalytic reforming on the one hand, and oxidative reforming on the other hand, an exothermic reaction, are discussed in the following article: "Catalytic ammonia reforming: alternative routes to net-zero-carbon hydrogen and fuel", by Luis C. Cabellero et al, in Chem. Sci., 2022,13, 12945-12956. The present invention focuses on thermal reforming, i.e., in the absence of oxygen.

The technology to produce hydrogen from ammonia was already described in GB462531 (A), published in 1937. In this patent an apparatus for decomposing ammonia into nitrogen and hydrogen is disclosed, wherein a catalyst chamber is heated by radiation from an electric heater which is completely isolated from the ammonia or the products of decomposition. The art has significantly developed since this earlier publication. Improvements have been made on, e.g.:
- Hydrogen product quality, whereby for instance high purity hydrogen may be obtained with the use of one or more hydrogen separation units such as pressure swing absorption units and membrane separation units and the like;
- Energy management, resulting in an optimized zero-carbon manner of heating the catalyst chamber within the ammonia cracking reactor; with use of heat exchangers;
- Selective ammonia decomposition catalysts, and
- Exhaust management, to avoid release of ammonia and avoid the generation and release of NOx.

In WO2022243410A1, a process is disclosed for the synthesis of hydrogen via the catalytic cracking of ammonia; that comprises the steps of subjecting an ammonia-containing stream to a catalytic cracking step in the presence of heat to yield a thermally cracked stream containing nitrogen, hydrogen and possibly residual ammonia and optionally water. The process further comprises the steps of subjecting the thermally cracked stream to a hydrogen recovery step to yield a high-purity hydrogen stream and a reject gas (in this reference referred to as tail gas). The thermally cracked stream may be subjected to a scrubbing step in the presence of water. The process according to this reference comprises the step of recirculating at least a portion of the reject gas as a fuel gas to provide heat for the catalytic cracking step.

The art on ammonia decomposition catalysts is extensive and still growing. Thermodynamic conversion of ammonia to hydrogen is possible at a temperature as low as 400°C. However, in practice, the conversion rate depends on the type of catalyst being used. Typically, Ni is used. It is active at higher temperature (600-900°C) than Ru (active from 400°C). The latter catalyst and the new generation catalysts are more expensive. Catalysts based on nickel on a support (such as alumina or silica) have for instance been disclosed in: GB768091A; GB1000772A; GB750234A; KR100455009B1 and EP687494B1.

From various documents a process for producing hydrogen gas from ammonia by thermal reforming is known, wherein the catalyst chamber is heated indirectly with the aid of hot flue gases from an external combustion unit. In addition to WO2022243410A1, in for instance US2601221A; GB1092380A; and US3198604A the external combustion unit runs on a fuel that comprises ammonia and combustible reject gases downstream from the hydrogen separation units. The current invention likewise focusses on producing hydrogen gas from ammonia by thermal reforming in a catalyst chamber that is heated indirectly with the aid of hot flue gases from an external combustion unit.

The external combustion unit requires a fuel. Ideally ammonia reacts with oxygen to form nitrogen and water. However, ammonia may also react with oxygen to form nitrogen monoxide and other oxides. These nitrogen oxides ("NOx") should be removed. Selective catalytic reduction (SCR) is considered particularly suited for this purpose by chemically reacting the nitrogen oxides in the flue gases with oxygen and added ammonia at elevated temperature in the presence of a solid catalyst to produce nitrogen and water, so that the treated flue gases can subsequently be released to the atmosphere. For instance, in WO2022265648A1 use is made of an SCR unit that employs ammonia which is extracted from the product stream of the catalytic cracking step. Controlled staged combustion, as disclosed in WO2013036124 may also be used to mitigate NOx formation.

In EP2276693A2 an apparatus for converting ammonia gas into nitrogen and hydrogen gases is disclosed that includes: (a) a heater for heating ammonia to convert it into gas; (b) a reactor including a first path for containing a catalyst for facilitating conversion of ammonia into nitrogen and hydrogen; (c) a first heat exchange arrangement outside the reactor for heating the ammonia before it is passed into the reactor, and (d) a second heat exchange arrangement in the reactor including a second path in the reactor for passing the nitrogen and hydrogen gases through the reactor in heat exchange relationship with the first path to effect further heating of the ammonia. In this reference a pipe-in-pipe arrangement, hence a bayonet type reactor, is disclosed.

The use of hydrogen separation units such as Pressure Swing Absorption unit ("PSA") or membrane separation units or the like for purifying hydrogen is also part of the public domain. Examples on PSA include US4475929 with at least three absorbent beds. Herein also the value of the waste gas as a fuel is disclosed. Similar art may be found on membrane separation units.

It should be noted, however, that the separation of a (pure) hydrogen stream may not be required. The cracked gas may be used as such, or (with a higher energy content) after removal of part of the nitrogen gas contained therein.

The cracked gas may for instance find application in Blast Furnaces. The current steel production process involves a step wherein iron ore is combined with carbon to produce pig iron. This process is predominantly executed within blast furnaces, where carbon, in the form of coke or pulverized coal, is consumed. Consequently, the process generates residual gases referred to as blast furnace gas, which constitutes the largest source of emissions in most steel plants. Numerous efforts have been made to mitigate these emissions, including substituting PCI with alternative energy-containing gases, such as hydrogen-enriched gas. One approach to supplying hydrogen-enriched gases involves the cracking of green ammonia or ammonia with a low (preferably zero) carbon footprint. One embodiment of the present invention offers a solution for directly delivering cracked ammonia to the blast furnace without requiring prior purification. The direct supply of unpurified cracked ammonia to the blast furnace eliminates the need for costly and time-consuming purification processes, resulting in increased operational efficiency and cost savings.

Another interesting application of cracked gas is in Direct Reduced Iron Plants. With the increasing pressure to decarbonize steel production, alternative pathways that rely on renewable hydrogen as a reductant, rather than carbon, are being explored and implemented. These processes, known as Hydrogen-based Direct Reduced Iron (H-DRI), require the supply of hydrogen to a shaft furnace where it interacts with iron for reduction. Due to the endothermic nature of the process, hydrogen is often provided in excess and at high temperatures (>1000°C) to create thermodynamically and kinetically favourable conditions for the reduction process. One embodiment of the present invention offers a solution where wherein cracked ammonia, containing nitrogen and hydrogen, are supplied at high temperatures to the shaft furnace. The presence of nitrogen aids in heat management, as it acts as an energy carrier, minimizing gas cooling and allowing for higher outlet temperatures compared to feeding only hydrogen.

A further interesting application of cracked gas is in Power Production (Gas Turbines). A common method of producing power from gaseous fossil fuels such as natural gas is with gas turbines. These units consist of a compressor, combustion system and turbine. The compressors draw in air and increases it to a high pressure. The high-pressure air is injected into a combustion chamber together with compressed fossil fuel such as natural gas at high velocities. The mixtures combust within the combustion chamber at high temperatures and pressures. The high temperature, high pressure gas is expanded in a turbine and the rotational energy of the turbine is used to drive the compressor and to rotate a generator to produce electricity. Once again, due to the increasing demand to decarbonise, alternatives to fossil fuels are being considered. The present invention offers a solution to this wherein (green) ammonia can be cracked to produce hydrogen, nitrogen and unconverted ammonia. This gas can replace the fossil fuel in existing gas turbine or new built gas turbines specifically for combusting the lower carbon mixture. The combustion can be one either only using cracked gas or a mixture of cracked gas and fossil fuel. Deploying the present invention in such a manner provides options to incrementally decarbonise and to use existing assets. Cracked gas may also find application in Boilers (Steam and/or Power). A method of utilising fossil fuels such as coal or natural gas is to combust the fuel in the presence of air in a boiler. The boiler uses the heat released from the fossil fuel to raise steam from water. The steam can be either saturated steam or superheated steam. The steam can be used as steam or be converted to electricity. If superheated steam is produced, it can be expanded in a turbine and the rotational energy of the turbine is used to rotate a generator to produce electricity. One embodiment of the present invention offers a solution to this wherein (green) ammonia can be cracked to produce hydrogen, nitrogen and unconverted ammonia. This gas can replace the fossil fuel in existing boilers or newly built gas turbines. The combustion can be one either only using cracked gas or a mixture of cracked gas and fossil fuel. Deploying the present invention in such a manner provides options to incrementally decarbonise and to use existing assets.

Moreover, cracked gas may find application in Shipping (Prime Movers). The utilization of fossil fuels in maritime transportation results in the emission of approximately 3 tons of CO₂ per ton of Heavy Fuel Oil consumed, leading to a substantial volume of CO₂ emissions. These emissions primarily stem from the combustion of various shipping fuels, such as Heavy Fuel Oil, Heavy Gas Oil, Marine Diesel Oil, and similar fuels, within the ship's engine. In light of ongoing decarbonization initiatives, engine manufacturers and ship owners are actively exploring engines capable of operating on low carbon fuels. Ammonia represents one of the investigated options. However, due to ammonia's suboptimal combustion properties, the incorporation of a pilot fuel becomes necessary. This pilot fuel can either be the existing fossil fuel or an alternative gas mixture possessing easier combustibility characteristics. An embodiment of the present invention offers a solution wherein cracked ammonia can be used as pilot fuel.

In US2022388841 a reforming apparatus is described in which an ammonia gas is burned with air to generate heat for reforming an ammonia gas. According to this process, ammonia gas and air are introduced into a combustion zone and ignited, and the ammonia gas to be reformed is introduced downstream of this combustion zone. The flue gases from ammonia combustion are thus combined with the ammonia gas to be reformed, so that the reformed gas, in addition to hydrogen, also contains the combustion products generated by the combustion of ammonia gas, which complicates further processing and purification of the reformed gas for the production of hydrogen.

In KR102538689 a combined system for electricity generation is described. The system includes a gas turbine, a heat recovery steam generator (HRSG), and an ammonia cracker that cracks ammonia by heat exchange with a portion of the gas turbine exhaust gas and sends the cracked ammonia gas as fuel to the gas turbine burner. In this process no hydrogen is produced.

WO202301879 relates to a method for extracting hydrogen from methanol or ammonia, for example for operating fuel cells. The method is characterized in that methanol or ammonia is evaporated in a first step and reformed into a hydrogen-containing gas mixture in a second step. In a third step, hydrogen is separated from the gas mixture in a membrane process at a temperature of 300 to 600 °C, and in a fourth step the gaseous retentate from the membrane process is burned with ambient air. The combustion gases are led through various heat exchangers to evaporate, heat and reform the methanol or ammonia. The permeate from the membrane process preheats the ambient air to the burner in a heat exchanger. Since the permeate from the membrane process is obtained at highly reduced pressure, energy-intensive compression of the separated hydrogen product is required for effective hydrogen transport and delivery.

There is a need for an improved process for the production of hydrogen from ammonia and specifically for processes that are efficient in terms of energy consumption and hydrogen production whilst reducing or eliminating the need to combust fossil fuels. Moreover, there is a need to do so with a minimum of ammonia loss or NOx emissions.

Whereas the art on heat exchangers is extensive, the issue remains how to effectively supply the required heat for the ammonia cracking reaction to the ammonia cracking reactor with a minimum amount of ammonia fuel use, with minimum ammonia and NOₓ emissions to the environment, and in such a controlled way that (1) peak temperatures in the heat-exchanging parts of the cracking reactor remain below critical material limits, (2) a less challenging and more homogeneous temperature profile is obtained to prevent often-occurring material failures, and (3) that ammonia cracking occurs at the temperature optimized for the catalyst that is used in the ammonia cracking reactor. The present inventor devised a process that provides improvements in all these aspects.

### Summary of the Invention

The invention concerns a process for producing hydrogen by thermal reforming of ammonia, preferably an ammonia stream or ammonia containing stream in a catalyst chamber of an ammonia cracking reactor that is heated indirectly with the aid of hot flue gases from an external combustion unit, comprising the steps of:
a) incomplete combustion of a fuel comprising ammonia in the first stage of an external staged combustion unit to generate a flue gas stream of elevated temperature T1 in the range of 750 to 2000°C, preferably in the range of 1200 to 2000°C;
b) complete combustion of the fuel comprising ammonia in the second stage of the external staged combustion unit to generate a flue gas stream of a temperature T3 that is less than T1;
c) exchanging heat from the flue gas provided in step b) with the ammonia cracking reactor to raise the temperature in the catalyst chamber to a catalytic cracking temperature T2 in the range of 400 to 1000°C, more preferably in the range of 600 to 800°C;
d) subjecting ammonia in the heated ammonia cracking reactor of step c) to a catalytic ammonia-cracking step to yield a thermally cracked stream comprising hydrogen, and
e) separating the thermally cracked stream into a reject gas stream and an enriched hydrogen stream and withdrawing the enriched hydrogen stream,
wherein T3 is at least 50°C above T2 up to a maximum of 1600°C, preferably wherein T3 is at least 100°C above T2 up to a maximum of 1200°C and wherein T3 is at least 50°C below T1, preferably wherein T3 is at least 100°C below T1, more preferably wherein T3 is at least 200°C below T1 and wherein the fuel to the first combustion stage of step (a consists of ammonia and the reject gas stream of step e).

The controlled combustion in the second stage leads to a temperature reduction of the flue gas, which enables a more controllable catalytic conversion of ammonia in the ammonia cracking reactor. This protects the heat exchanging surfaces and the catalyst in the cracking reactor (i.e., no excessively high thermal loads due to lower gas temperatures). The moderate flue gas temperatures generated in this invention result in a less challenging and more homogeneous temperature profile for the materials and prevent common material failures due to high temperatures.

The combustion of the fuel occurs in two stages, with a less than stoichiometric amount of oxygen being used in the first stage, and downstream thereof, with more than stoichiometric amount of oxygen being used in the second stage, optionally with added amounts of additional quench fluids.

The invention also provides an apparatus for producing hydrogen by thermal reforming of ammonia.

### Brief description of the Drawings

Fig 1 is a schematic representation of the prior art, showing an apparatus for producing hydrogen by thermal reforming of ammonia.
Fig. 2 is a schematic representation according to the present invention, wherein a staged combustion unit is used, with an additional feed stream of air.
Fig. 3 is a schematic representation according to a more preferred embodiment of the present invention, with detailed information on the ammonia cracking reactor.

### Detailed description of the Invention

In the following discussion of embodiments of the present invention, the pressures given are absolute pressures unless otherwise stated. Moreover, the amounts in percentages and ppm are by volume unless otherwise stated.

It is important to note that the ammonia cracking reactor and the staged combustion unit of the present invention are separate units, unlike devices in which combustion and ammonia cracking are combined in a single unit. The staged combustion unit may therefore be referred to as an "external" unit. Heat transfer takes place by heat exchange between the flue gases from the external staged combustion unit and the ammonia cracking reactor, without mixing the flue gases with the ammonia that is thermally cracked in the ammonia cracking reactor.

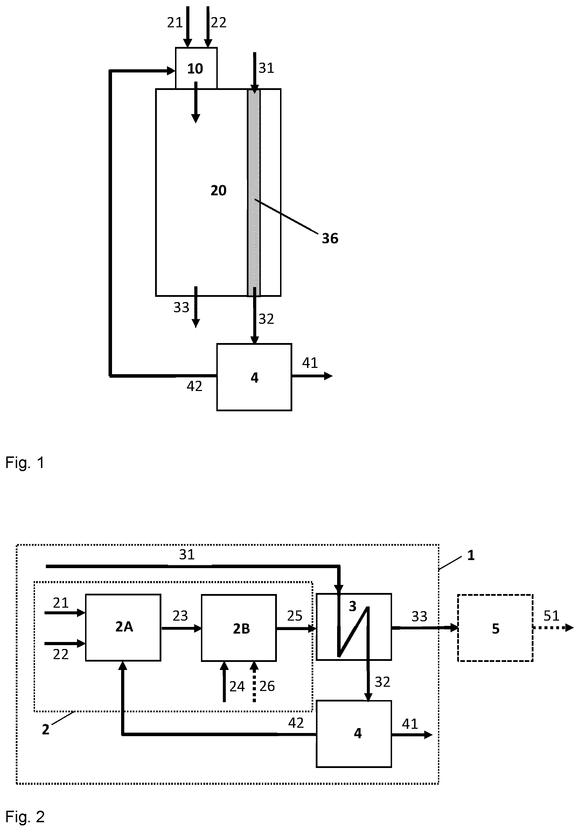

Fig. 1 is a schematic representation of the prior art, showing an apparatus (1) for producing hydrogen by thermal reforming of ammonia, comprising one or more burners (10) connected to an ammonia cracking reactor (20) comprising one or more burner-generated flame zones in thermal contact with one or more catalyst-filled reactor tubes (36). The ammonia may be in the form of an ammonia stream or a stream comprising ammonia. Fuel is introduced through inlet (21), oxygen-containing gas, typically air, is introduced through inlet (22). Ammonia is introduced through inlet (31) into the catalyst-filled reactor tube (36) where a catalytic ammonia-cracking step occurs to yield a thermally cracked stream, leaving at outlet (32). Cooled flue gas, having exchanged heat with the catalyst-filled reactor tube (36), exits the ammonia cracking reactor at outlet (33). Typically, the thermally cracked stream is sent to a hydrogen separator unit (4). At outlet (41) an enriched hydrogen stream may be retrieved, whereas the reject gases may be recirculated through line (42) to the burner (10). An enriched hydrogen stream will comprise more than 75% by volume of hydrogen, further comprising nitrogen and other inert gases, side-products, and possibly unconverted ammonia. Typically, it will comprise more than 98%, preferably more than to 99% hydrogen. Such other components, if present at all, may be present in an amount of 0.1% by volume or more. Not shown in Fig. 1 are the various additional optional apparatus components such as heat exchangers, scrubbers and tanks.

Fig. 2 is a schematic representation according to the present invention, using an external staged combustion unit. Here is shown the apparatus (1) for producing hydrogen by thermal reforming of ammonia, comprising
(i) a staged combustion unit (2) comprising
   a first combustion unit (2A) with one or more burners inside (not shown), with a fuel inlet (21), with an inlet (22) for the first oxygen-containing gas, typically air, and with an integrated outlet/inlet (23) for a first flue gas stream at a temperature T1, further comprising
   a second stage combustion unit (2B), connected to the integrated outlet/inlet (23) for the first flue gas at a temperature T1, an inlet (24) for the second oxygen-containing gas, and an outlet (25) for the second flue gas stream with a temperature T3,
(ii) an ammonia cracking reactor (3), and
(iii) a hydrogen separator unit (4).

Again, an ammonia containing stream is introduced through inlet (31) into the ammonia cracking reactor (3), whereas the thermally cracked stream, leaves at outlet (32) and a third flue gas stream, having exchanged heat within the ammonia cracking reactor, exits the ammonia cracking reactor (3) at outlet (33). The thermally cracked stream is sent to a hydrogen separator unit (4). At outlet (41) of the hydrogen separator an enriched hydrogen stream may be retrieved, whereas the reject gases are recirculated through line (42) to the first stage (2A) of the staged combustion unit. In the process of the present invention the enriched hydrogen stream will likewise comprise more than 75% by volume of hydrogen. Indeed, the enriched hydrogen stream will preferably comprise more than 98%, preferably more than to 99% hydrogen.

Also shown in dotted lines in Fig. 2 is an optional SCR unit (5) for treating the third flue gas stream with an outlet (51) for an extra low-NOₓ fourth flue gas stream. The second stage unit (2B) comprises an optional additional burner (not shown). Optionally, the staged combustion unit (2), and in particular at the second stage combustion unit (2B) may comprise additional inlets (26) for additional quench fluids, including various gases, liquids, and recycled and cooled flue gases and the like (shown in dotted line).

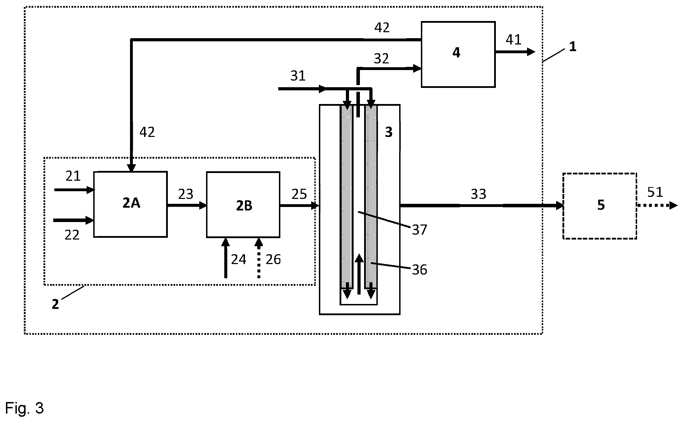

Fig. 3 is a schematic representation of the preferred embodiment of the present invention, further illustrating the ammonia cracking reactor (3), in the preferred form of a bayonet type reactor, comprising an inlet (31) for ammonia, connected to the catalyst filled reaction chamber (36), an outlet (33) for cooled flue gas, an inlet (25) for heated flue gas at temperature T3, and an outlet (32) connected to an inner pipe (37) that is passing through the reaction chamber (36).

Not shown in any of the figures, but the first combustion unit (2A) and/or the second stage combustion unit (2B) may, and preferably is equipped with analysers capable of analysing the content of the flue gas, as well as with analysers that measure the temperature. Also not shown in any of the figures are optional flow control means for adjusting the amount of the fuel, the oxygen-containing gas and/or the amount of quench fluid. Preferably, the data from the analysers are sent to an optional process control unit (not shown), that operates and adjust the flow control means.

The present invention provides for external combustion of a fuel comprising ammonia and optimized heating of the ammonia cracking reactor, with control of the temperature to the desired range for a given catalyst. For instance, when a nickel-based ammonium cracking catalyst is used in the ammonia cracking reactor, then the flue gases introduced into the ammonia cracking reactor are preferably at a temperature T3 that is at least 50, but preferably at least 100°C above the reaction temperature T2 in the reaction chamber. Less than 50°C is less preferred to ensure efficient transfer of heat. The flue gases are introduced into the ammonia cracking reactor preferably at a temperature T3 that is less than 1600, preferably less than 1200°C. This has the advantage of better catalyst control and limits the requirements on the ammonia cracking reactor. In case of a nickel-based catalyst is used in the ammonium cracking reactor, a suitable range for T3 is in the range of 700 to 1600°C, preferably 750-1200°C. When a ruthenium-based catalyst is used the preferred temperature is in the range of 700-1000°C.

In combination with ammonia any form of fuel may be used that is combustible and gaseous at the combustion conditions. Any form of oxygen-containing gas may be used. For instance, this may be pure oxygen, an oxygen-enriched stream of air, or even a nitrogen-enriched stream of air. Preferably air is used.

Combustion is a very exothermic reaction. While some of the surplus energy may be removed by employ of heat exchangers, the current invention more elegantly addresses this by combusting the fuel in two stages whereby flue gas is generated having a lower temperature. This avoids undesired transfers and loses of thermal energy to other media and allows for improved control of the temperature of the flue gas when used to heat the ammonia cracking reactor.

Optionally a quench fluid may be mixed into the first and/or second flue gas, e.g., water, steam, and/or other gases and liquids. It is also possible to use recycled flue gas, from outlets (33) or (51), after it has transferred some of its heat to the ammonia cracking reactor. For instance, part of the recycled flue gas may be introduced into the combustion unit downstream of the flame zone. The quench fluid may itself be at ambient or elevated temperature. For instance, it may have a temperature in the range of 20-500°C.

In the current invention the second oxygen-containing stream, introduced in the second stage of the staged combustion unit, ensures the combustion of the ammonia-containing fuel. In this process, the combustion occurs in two stages, with a less than stoichiometric amount of oxygen in the first stage, and with a greater than stoichiometric amount of oxygen in the second stage. The oxygen source in both cases can be any O₂-containing stream, but preferably is air. By combusting the fuel in (at least) two stages and using a surplus of oxygen in the second stage, the temperature of the flue gas exiting the combustion unit may be effectively controlled and tempered to the desired temperature T3 for use in the ammonia cracking reactor.

Preferably the fuel has a zero-carbon content. In accordance with the present invention, a secondary fuel source is used. The second source of fuel comprises or even consists of the reject gases containing unrecovered hydrogen from the hydrogen separation (4), nitrogen, possibly other inert gases and impurities, and unconverted ammonia from the ammonia cracking reactor (3), This is the reject gas that is obtained after enriched hydrogen has been removed from the cracked gas after ammonia cracking. This process can be performed in the apparatus that is illustrated in Fig. 2.

The staged combustion unit preferably comprises in the first stage of the combustion unit (2) an analyser for analysing the ammonia content and/or the NOx content of the flue gas stream before it enters the second stage of the combustion unit (2B). Moreover, in this case preferably a process control unit is used, that is programmed to control the partial oxidation in unit (2A) at less than stoichiometric conditions via the measured concentrations of chemical compounds (e.g., ammonia, hydrogen, and/or NOₓ species) in the flue gases. The full oxidation in unit (2B) is to avoid emissions of ammonia, hydrogen, and other combustible compounds, and to further control NOₓ-emissions by facilitating reactions between NOₓ and residual ammonia exiting the first combustion stage. An analyser for analysing the NOₓ content in or after the second combustion unit (2B) can also be part of the process control.

A two-stage combustion unit is known from EP2753416.

This patent discloses a process for incinerating ammonia in an ammonia incinerator comprising a first incineration step at controlled sub-stoichiometric incineration conditions and a second incineration step with a greater than stoichiometric amount of oxygen, whereby a product stream is produced with reduced NOx formation. Whereas it is beneficial to make use of the analysers shown in this patent to avoid NOx generation, it should be realized that in the present apparatus the staged combustion unit is preferably equipped with a temperature analyser and is optimized with respect to the temperature of the flue gas so that this can be used to heat an ammonia cracking reactor.

To start the reaction in the preferred two stage combustion unit, a fuel stream is preferably ignited together with oxygen in the first stage (2A) of the combustion unit (2) to reach desirable combustion conditions. For combusting ammonia in unit (2A) of a staged combustion unit a temperature in the range of 750 to 2000°C, preferably in the range of 1200 to 2000°C is desired. Stable combustion of an ammonia-containing stream below 750°C may be achieved, e.g., with the addition of hydrogen, but is more difficult to control. Above 2000°C, but often above 1800°C, commonly applied refractory lining materials that are used for heat insulation are less suitable. After a suitable temperature has been reached an ammonia containing stream is introduced. Additional fuel may be mixed with the ammonia containing stream, whereupon it co-reacts with the first oxygen-containing stream. For instance, it is beneficial to recirculate the reject gas stream from the hydrogen separation stream, which will contain unrecovered hydrogen, nitrogen, possibly other inerts and impurities, and unconverted ammonia from the ammonia cracking reactor (3).

Within the two-stage combustion unit, if there are no combustible components introduced as fuel into the unit (2A) other than ammonia, then the ammonia fuel is preferably combusted in this first stage with between 80 and slightly less than 100%, e.g., 90 to 99%, or 95 to 98%, of the stoichiometric amount of oxygen required for combustion of the ammonia fuel. If the ammonia containing stream or a secondary fuel stream comprises additional combustible components, like hydrogen, then the amount of oxygen should be adjusted accordingly, preferably to an amount of oxygen in the range of 50 to 99% of the combustion stoichiometry with respect to all the combustible components that are present in the fuel streams to unit (2A). Using an analyser in accordance with the preferred embodiment of the current invention has the advantage that the amounts of reactants can be controlled and adjusted, despite the rather complex interrelation when there are multiple components and hence multiple reactions taking place at changing combustion conditions. For instance, the amount of oxygen may be adjusted by changing the inlet flow rate of oxygen to the ammonia containing stream. Alternatively, the air used as oxygen stream may be enriched in oxygen or enriched in nitrogen.

The oxygen-containing stream may be introduced through one or more inlets (22a, 22b, etc.), but introducing through one inlet suffices. For instance, one inlet suffices if design precautions are taken to ensure proper combustion and mixing in the first combustion stage (2A). The same applies to the ammonia-supplied as fuel stream at inlet (21) and the recycled reject gas stream through line (42). The residence time of the reactants in the first stage (2A) of the staged combustion unit (2) can be short, i.e., 1 second or less, even 0.2 seconds or less.

In accordance with the current invention, ammonia is combusted in unit (2A) close to completion, but not entirely, with some nonzero residual ammonia content and hydrogen (and potentially other combustible compounds) remaining in the flue gas stream. The residual ammonia content, being greater than zero, may be less than 1000 ppm and is preferably less than 100 ppm. If the combustion process in unit (2A) if too complete, a high level of NOₓ formation is generated in the first combustion stage. If, on the other hand, the combustion process in unit (2A) is too incomplete, then the flue gas stream (23) will have a high ammonia and hydrogen content, which will lead to a high NOₓ content when this gas stream is combusted in the second stage (2B). In other words, the inventor has found out that to reduce the NOₓ in the second-stage flue gases (25), and thus avoid the potential need for an SCR unit, the completion of the combustion in the first stage (2A) can be aimed to achieve a negligible residual ammonia content of preferably less than 100 ppm, more preferably less than 50 ppm.

A temperature is maintained in the second stage (2B) of the staged combustion unit that is at least 50°C below that in the first stage, and preferably in a range of from 700 to 1200°C, more preferably in the range of 750 to 1150 and still more preferably between 800 to 1100°C. These reaction temperatures help to provide essential temperature control to the ammonia cracking reactor (3), ensure complete combustion of combustible compounds exiting the first flue gas stream (23), and further control over NOₓ formation and reduction reactions in the second combustion stage (2B) to achieve negligible emission levels for ammonia and other combustibles and, at the same time, low NOₓ emissions in the second flue gas stream at the integrated outlet/inlet (25). Oxygen is supplied to unit (2B) in an amount to ensure full combustion. If the reaction temperature as a result of the combustion of the combustible components in the first stage (2A) drops below the lower limit, then it may be advantageous to add additional fuel, e.g., via inlet (21). It may also be advantageous to quench the temperature in the second stage (2B) with additional quench fluids, including water, steam, other gases or liquids, and/or recycled flue gases (e.g., flue gas stream at outlet (33) or (51)).

The design of the burner in the first stage (2A) of the staged combustion unit and the optional burner in the second stage (2B) is not particularly relevant. Multiple and various types of burners may be used. Preferably, a burner is used that mixes the combustible stream(s) and the oxygen-containing stream. The burner may be equipped with an ignitor. The design of the staged combustion unit comprising (2A) and (2B) is not particular relevant either. In fact, the staged combustion unit may have both units as part of a single reactor vessel or comprise two separate reactor vessels that are connected. Moreover, unit (2B) may also contain additional burners. Single or multiple inlet or outlet nozzles may be used for the process streams at (integrated) inlets/outlets (21), (22), (23), (24), (25) to and from the staged combustion unit (2).

The conversion of ammonia into nitrogen and hydrogen may be performed in accordance with the technology described in the background part of this description. For instance, an ammonia cracking reactor may be used as described in EP2276693. In Fig. 3 a schematic representation of a pipe-in-pipe arrangement is provided showing the ammonia cracking reactor in the preferred form of a bayonet type reactor. As shown in Fig. 3, the reactor comprises a reaction chamber (36) that is filled with a catalyst. The reactor may comprise additional reaction chambers (36a, 36b, etc.). With the use of this bayonet-type reactor it is possible to arrange for substantial heat transfer into the ammonia during its passage through the reactor and before it is cracked.

Various catalysts may be used. US Patent Nos. 5,055,282 and 5,976,723 disclose a method for cracking ammonia into hydrogen and nitrogen in a decomposition reactor. The method consists of exposing ammonia to a suitable cracking catalyst under conditions effective to produce nitrogen and hydrogen. In this case the cracking catalyst consists of an alloy of zirconium, titanium, and aluminium doped with two elements from the group consisting of chromium, manganese, iron, cobalt, and nickel. US Patent No. 6,936,363 discloses a method for the production of hydrogen from ammonia based in a cracker at 500 -750°C. A catalytic fixed bed may be used. The catalyst may be Ni, Ru and Pt on Al₂O₃ or on other carries. In EP3253487 a nickel-based catalyst for the thermal decomposition of ammonia (e.g., at relatively high temperatures such as 700° to 800°C) is provided. The catalyst comprises at least 25 % by weight of nickel oxide and is present in powder/pulverulent form (i.e., not in the form of, e.g., pellets). Any of these catalysts or any of the catalysts disclosed in GB768091A; GB1000772A; GB750234A; KR100455009B1 and EP687494B1 may be used. If a catalyst other than Ni is used, then it may be desirable to adjust the temperature in the reaction chamber.

The ammonia containing stream may optionally comprise other components such as water. Preferably, the ammonia containing stream contains no more than 10%, preferably no more than 5% by volume of other components, more preferably no more than 0.5% by volume of other components. Preferably, this stream consists of ammonia. Additives to improve fluid properties (such as reduced corrosivity) or facilitate chemical conversion in the cracking reactor (3) or inhibit undesired reactions in the reactor (3) or in other units or piping may be added deliberately, if desired, in effective amounts.

As indicated above, the process of the present invention produces a cracked stream comprising hydrogen. Various uses of the cracked stream have been mentioned in the introduction. For applications where enriched hydrogen gas is required, the apparatus preferably includes a unit (4) for separating the hydrogen from the cracked stream. An enriched hydrogen stream may, e.g., be obtained with the use of membrane technology, with the use of scrubbers (for removing residual ammonia) or with the use of Pressure Swing Absorption units. As mentioned before, PSA's have been used in the prior art, with examples disclosed in US4475929 with at least three absorbent beds. A membrane in combination with a PSA has been used in WO2021257944A1. In WO2022265651A1 two PSA units in parallel are used.

As indicated above, the enriched hydrogen stream preferably contains 95% by volume or more hydrogen. This means that the remaining part of the hydrogen remains in the cracked stream. Where the cracked stream is used to fuel the combustion unit, this means that the hydrogen is still efficiently used.

The present process has the advantages of an effective and efficient temperature control of the ammonia cracking reactor, and a controlled combustion process that ensures full conversion of combustible compounds and minimizes NOₓ concentration in the combustion flue gases, even if pure ammonia or a high-ammonia-content stream is used as fuel. This enables safe, controlled, and reliable operation of the ammonia cracking process for hydrogen production and mitigates the risk of undesired nitrogen oxides and residual ammonia, hydrogen, and other combustibles in the exhaust gases. It may be advantageous to further reduce the NOₓ level for which selective catalytic reduction (SCR) is considered particularly suited by chemically reacting the residual nitrogen oxides in the flue gases with oxygen and added ammonia or nitrogen compounds like urea at elevated temperature in the presence of a solid catalyst to produce nitrogen and water, so that the treated flue gases can subsequently be released to the atmosphere with even lower emissions. Accordingly, an SCR unit as disclosed in for instance WO2022265648A1, or EP2301650, or similar may be used.

The present invention also provides an apparatus (1) for producing hydrogen by thermal reforming of ammonia, comprising
(i) a staged combustion unit with a first stage unit (2A) with an inlet (21) for fuel, an inlet (22) for a first oxygen-containing stream and an integrated outlet/inlet (23) for a first flue gas connected with a second stage unit (2B) with an inlet (24) for a second oxygen-containing gas and an integrated outlet/inlet (25) for a second flue gas stream, and
(ii) an ammonia cracking reactor (3) connected with the integrated outlet/inlet (25) for flue gas of elevated temperature from the staged combustion unit, i.e., the second flue gas stream, provided with an outlet (33) for a flue gas stream having exchanged heat, i.e., the third flue gas stream and therefore at reduced temperature, and an inlet (31) for an ammonia stream connected to the reactor chamber within the ammonia cracking reactor and acting as a reaction zone containing ammonia cracking catalyst and an outlet (32) for the thermally cracked stream, and
(iii) a hydrogen separation unit (4), preferably a PSA. This is the apparatus shown in Fig. 2. The second stage unit (2B) may also comprise more than one inlet (24), for instance for introducing an additional quench fluid (inlet 26, shown with dotted lines). Optionally, the apparatus may comprise a further unit (5) to remove NOx, e.g., in the form of an SCR unit, here shown in dotted lines.

Also disclosed is an apparatus (1) wherein the ammonia cracking reactor (3), is in the form of a bayonet type reactor, comprising an inlet (31) for ammonia, connected to the catalyst filled reaction chamber (36), an outlet (33) for cooled flue gas, downstream of the reaction chamber, an inlet (25) for heated flue gas from the staged combustion unit (2), and an outlet (32) connected to an inner pipe (37) that is passing through the reaction chamber (36). This is the apparatus shown in Fig. 3. Again, the apparatus comprises a hydrogen separation unit (4), preferably a PSA, and/or further unit (5) to remove NOx, e.g., in the form of an SCR unit.

## Claims

1. Process for producing hydrogen by thermal reforming of ammonia in an apparatus comprising an ammonia cracking reactor with a catalyst chamber and a staged combustion unit, wherein the catalyst chamber of the ammonia cracking reactor is heated indirectly by heat exchange with flue gases from the staged combustion unit, comprising the steps of:
a) incomplete combustion of a fuel comprising ammonia in a first stage of the staged combustion unit with a first oxygen-containing stream to generate a first flue gas stream of elevated temperature T1 in the range of 750 to 2000°C, preferably in the range of 1200 to 2000°C;
b) complete combustion of the fuel comprising ammonia by further combustion of the first flue gas stream in the second stage of the staged combustion unit with a second oxygen-containing stream to generate a second flue gas stream of a temperature T3 that is less than T1;
c) exchanging heat from the second flue gas stream provided in step b) with the ammonia cracking reactor to raise the temperature in the catalyst chamber to a catalytic cracking temperature T2 in the range of 400 to 1000°C, more preferably in the range of 600 to 800°C;
d) subjecting an ammonia containing stream in the ammonia cracking reactor heated in step c) to a catalytic ammonia-cracking step to yield a thermally cracked stream comprising hydrogen, and
e) separating the thermally cracked stream into a reject gas stream and an enriched hydrogen stream and withdrawing the enriched hydrogen stream,
wherein T3 is at least 50°C above T2 and wherein T3 is up to a maximum of 1600°C, and wherein T3 is at least 50°C below T1, wherein the reject gas stream of step e) is recycled to the first stage of the staged combustion unit and wherein the fuel in step a) consists of ammonia and the reject gas stream of step e).

2. The process of claim 1, wherein the fuel is combusted in the first stage of the staged combustion unit with a sub-stoichiometric amount of oxygen, preferably supplied as air, and downstream in the second stage of the staged combustion unit with a surplus amount of oxygen, preferably supplied as air.

3. The process of any one of claims 1-2, wherein ammonia is combusted in the first stage of the combustion unit up to a residual ammonia content that is more than zero and less than 1000 ppm, preferably less than 100 ppm, more preferably less than 50 ppm.

4. The process of any one of claims 1-3, wherein T3 is at least 100°C above T2 and wherein T3 is up to a maximum of 1200°C and/or wherein T3 is at least 100°C below T1, more preferably wherein T3 is at least 200°C below T1.

5. The process of any one of claims 1-4, wherein the sub-stoichiometric amount of oxygen used in the first stage of the combustion unit is 80 to less than 100% and preferably 90 tot 99%, more preferably 95 to 98% of the stoichiometric amount.

6. The process of any one of claims 1-5, wherein the combustion in the first stage of the combustion unit is performed at a temperature in the range of 1500-1800°C.

7. The process of any one of claims 1-6, wherein the combustion in the second stage of the combustion unit is performed at a temperature in the range of 700-1200°C, preferably in the range of 750-1150°C, more preferably in the range of 800-1100°C.

8. The process of any one of claims 1-7, wherein the first oxygen-containing stream, preferably air, has a temperature in the range of 20-500°C.

9. The process of any one of claims 1-8, wherein the second oxygen-containing stream, preferably air, has a temperature in the range of 20-500°C.

10. The process of any one of claims 1-9, wherein a quench fluid is added to the second stage of the combustion unit.

11. An apparatus (1) for producing hydrogen by thermal reforming of ammonia, comprising
(i) a staged combustion unit (2) with a first stage unit (2A) configured for partial combustion of fuel with an inlet (21) for fuel and an inlet (22) for a first oxygen-containing stream and an integrated outlet/inlet (23) for a first flue gas stream, and a second stage unit (2B) connected to the integrated outlet/inlet (23) and configured for complete combustion of fuel with an inlet (24) for a second oxygen-containing gas and an integrated outlet/inlet (25) for a second flue gas stream, and
(ii) an ammonia cracking reactor (3) with a catalyst chamber (36), wherein reactor (3) is connected to outlet/inlet (25) of the staged combustion unit and configured for heat exchange with the second flue gas stream from the staged combustion unit, wherein reactor (3) is further provided with an outlet (33) for a third flue gas after exchange of heat, and wherein the catalyst chamber (36) is provided with an inlet (31) for an ammonia stream and provided with an outlet (32) for a thermally cracked stream comprising hydrogen, and
(iii) a hydrogen separation unit (4).

12. The apparatus (1) of claim 11, wherein the second stage unit (2B) comprises a further inlet for a quench fluid.

13. The apparatus (1) of claim 11, wherein the ammonia cracking reactor (3) is in the form of a bayonet type reactor, wherein the outlet (32) for the thermally cracked stream comprising hydrogen is connected to an inner pipe (37) that is passing through the catalyst chamber (36).

14. The apparatus (1) of any one of claims 11-12, wherein the hydrogen separation unit (4) is a PSA.

15. The apparatus (1) of any one of claims 11-13, further comprising a unit (5) to remove NOx.

## Patentansprüche

1. Verfahren zur Herstellung von Wasserstoff durch thermische Reformierung von Ammoniak in einer Vorrichtung, die einen Ammoniakcrackreaktor mit einer Katalysatorkammer und einer gestuften Verbrennungseinheit umfasst, wobei die Katalysatorkammer des Ammoniakcrackreaktors indirekt durch Wärmetausch mit Rauchgasen aus der gestuften Verbrennungseinheit beheizt wird, umfassend die Schritte:
a) unvollständige Verbrennung eines Ammoniak umfassenden Brennstoffs in einer ersten Stufe der gestuften Verbrennungseinheit mit einem ersten sauerstoffhaltigen Strom, um einen ersten Rauchgasstrom mit erhöhter Temperatur T1 in dem Bereich von 750 bis 2000 °C, vorzugsweise in dem Bereich von 1200 bis 2000 °C, zu erzeugen;
b) vollständige Verbrennung des Ammoniak umfassenden Brennstoffs durch weitere Verbrennung des ersten Rauchgasstroms in der zweiten Stufe der gestuften Verbrennungseinheit mit einem zweiten sauerstoffhaltigen Strom, um einen zweiten Rauchgasstrom mit einer Temperatur T3, die kleiner als T1 ist, zu erzeugen;
c) Austauschen von Wärme aus dem bei Schritt b) bereitgestellten zweiten Rauchgasstrom mit dem Ammoniakcrackreaktor, um die Temperatur in der Katalysatorkammer auf eine katalytische Cracktemperatur T2 in dem Bereich von 400 bis 1000 °C, bevorzugter in dem Bereich von 600 bis 800 °C, zu erhöhen;
d) Unterwerfen eines ammoniakhaltigen Stroms in dem bei Schritt c) erhitzten Ammoniakcrackreaktor an einen katalytischen Ammoniakcrackschritt, um einen thermisch gecrackten Strom zu erhalten, der Wasserstoff umfasst, und
e) Trennen des thermisch gecrackten Stroms in einen Rejektgasstrom und einen angereicherten Wasserstoffstrom und Abziehen des angereicherten Wasserstoffstroms,
wobei T3 mindestens 50 °C über T2 liegt und wobei T3 bis zu einem Maximum von 1600 °C beträgt und wobei T3 mindestens 50 °C unter T1 liegt, wobei der Rejektgasstrom von Schritt e) zu der ersten Stufe der gestuften Verbrennungseinheit zurückgeführt wird und wobei der Brennstoff bei Schrittt a) aus Ammoniak und dem Rejektgasstrom von Schritt e) besteht.

2. Verfahren nach Anspruch 1, wobei der Brennstoff in der ersten Stufe der gestuften Verbrennungseinheit mit einer unterstöchiometrischen Menge an Sauerstoff, vorzugsweise als Luft zugeführt, und stromabwärts in der zweiten Stufe der gestuften Verbrennungseinheit mit einer überschüssigen Menge an Sauerstoff, vorzugsweise als Luft zugeführt, verbrannt wird.

3. Verfahren nach einem der Ansprüche 1-2, wobei Ammoniak in der ersten Stufe der Verbrennungseinheit bis zu einem Restammoniakgehalt verbrannt wird, der mehr als null und weniger als 1000 ppm, vorzugsweise weniger als 100 ppm, bevorzugter weniger als 50 ppm, beträgt.

4. Verfahren nach einem der Ansprüche 1-3, wobei T3 mindestens 100 °C über T2 liegt und wobei T3 bis zu einem Maximum von 1200 °C beträgt und/oder wobei T3 mindestens 100 °C unter T1 liegt, bevorzugter wobei T3 mindestens 200 °C unter T1 liegt.

5. Verfahren nach einem der Ansprüche 1-4, wobei die unterstöchiometrische Menge an Sauerstoff, die in der ersten Stufe der Verbrennungseinheit verwendet wird, 80 bis weniger als 100 % und vorzugsweise 90 bis 99 %, bevorzugter 95 bis 98 %, der stöchiometrischen Menge beträgt.

6. Verfahren nach einem der Ansprüche 1-5, wobei die Verbrennung in der ersten Stufe der Verbrennungseinheit bei einer Temperatur in dem Bereich von 1500-1800 °C durchgeführt wird

7. Verfahren nach einem der Ansprüche 1-6, wobei die Verbrennung in der zweiten Stufe der Verbrennungseinheit bei einer Temperatur in dem Bereich von 700-1200 °C, vorzugsweise in dem Bereich von 750-1150 °C, bevorzugter in dem Bereich von 800-1100 °C, durchgeführt wird.

8. Verfahren nach einem der Ansprüche 1-7, wobei der erste sauerstoffhaltige Strom, vorzugsweise Luft, eine Temperatur in dem Bereich von 20-500 °C aufweist

9. Verfahren nach einem der Ansprüche 1-8, wobei der zweite sauerstoffhaltige Strom, vorzugsweise Luft, eine Temperatur in dem Bereich von 20-500 °C aufweist

10. Verfahren nach einem der Ansprüche 1-9, wobei ein Quenchfluid zu der zweiten Stufe der Verbrennungseinheit zugegeben wird.

11. Vorrichtung (1) zur Erzeugung von Wasserstoff durch thermische Reformierung von Ammoniak, umfassend
(i) eine gestufte Verbrennungseinheit (2) mit einer Erststufeneinheit (2A), die zur teilweisen Verbrennung von Brennstoff ausgelegt ist, mit einem Einlass (21) für Brennstoff und einem Einlass (22) für einen ersten sauerstoffhaltigen Strom und einem integrierten Auslass/Einlass (23) für einen ersten Rauchgasstrom, und eine zweite Stufeneinheit (2B), die mit dem integrierten Auslass/Einlass (23) verbunden ist und zur vollständigen Verbrennung von Brennstoff ausgelegt ist, mit einem Einlass (24) für ein zweites sauerstoffhaltiges Gas und einem integrierten Auslass/Einlass (25) für einen zweiten Rauchgasstrom, und
(ii) einen Ammoniak-Crackreaktor (3) mit einer Katalysatorkammer (36), wobei der Reaktor (3) mit dem Auslass/Einlass (25) der gestuften Verbrennungseinheit verbunden und zum Wärmetausch mit dem zweiten Rauchgasstrom aus der gestuften Verbrennungseinheit ausgelegt ist, wobei der Reaktor (3) ferner mit einem Auslass (33) für ein drittes Rauchgas nach Wärmetausch versehen ist, und wobei die Katalysatorkammer (36) mit einem Einlass (31) für einen Ammoniakstrom und mit einem Auslass (32) für einen thermisch gekrackten Strom, der Wasserstoff umfasst, versehen ist, und
(iii) eine Wasserstofftrenneinheit (4).

12. Vorrichtung (1) nach Anspruch 11, wobei die zweite Stufeneinheit (2B) einen weiteren Einlass für ein Quenchfluid umfasst.

13. Vorrichtung (1) nach Anspruch 11, wobei der Ammoniakcrackreaktor (3) in der Form eines Bajonettreaktors vorliegt, wobei der Auslass (32) für den thermisch gecrackten Strom, der Wasserstoff umfasst, mit einem Innenrohr (37) verbunden ist, das durch die Katalysatorkammer (36) verläuft.

14. Vorrichtung (1) nach einem der Ansprüche 11-12, wobei die Wasserstofftrenneinheit (4) ein PSA ist.

15. Vorrichtung (1) nach einem der Ansprüche 11-13, ferner umfassend eine Einheit (5) zum Entfernen von NOx.

## Revendications

1. Procédé de production d'hydrogène par reformage thermique d'ammoniac dans un appareil comprenant un réacteur de craquage d'ammoniac comportant une chambre de catalyseur et une unité de combustion étagée, dans lequel la chambre de catalyseur du réacteur de craquage d'ammoniac est chauffée indirectement par échange de chaleur avec des gaz de combustion provenant de l'unité de combustion étagée, comprenant les étapes de:
a) combustion incomplète d'un combustible comprenant de l'ammoniac dans un premier étage de l'unité de combustion étagée avec un premier flux contenant de l'oxygène pour générer un premier flux de gaz de combustion à température élevée T1 dans la plage de 750 à 2 000 °C, de préférence dans la plage de 1 200 à 2 000 °C ;
b) combustion complète du combustible comprenant de l'ammoniac par combustion supplémentaire du premier flux de gaz de combustion dans le deuxième étage de l'unité de combustion étagée avec un deuxième flux contenant de l'oxygène pour générer un second flux de gaz de combustion d'une température T3 qui est inférieure à T1 ;
c) échange de chaleur du second flux de gaz de combustion fourni à l'étape b) avec le réacteur de craquage d'ammoniac pour élever la température dans la chambre de catalyseur jusqu'à une température de craquage catalytique T2 dans la plage de 400 à 1 000 °C, plus préférablement dans la plage de 600 à 800 °C ;
d) soumission d'un flux contenant de l'ammoniac dans le réacteur de craquage d'ammoniac chauffé à l'étape c) à une étape de craquage catalytique d'ammoniac pour obtenir un flux de craquage thermique comprenant de l'hydrogène et
e) séparation du flux de craquage thermique en un flux de gaz de rejet et un flux d'hydrogène enrichi et soutirage du flux d'hydrogène enrichi,
dans lequel T3 est au moins 50 °C au-dessus de T2 et dans lequel T3 est jusqu'à un maximum de 1 600 °C, et dans lequel T3 est au moins 50 °C au-dessous de T1, dans lequel le flux de gaz de rejet de l'étape e) est recyclé au premier étage de l'unité de combustion étagée et dans lequel le combustible dans l'étape a) est constitué d'ammoniac et du flux de gaz de rejet de l'étape e).

2. Procédé selon la revendication 1, dans lequel le combustible est brûlé dans le premier étage de l'unité de combustion étagée avec une quantité sous-stœchiométrique d'oxygène, de préférence fournie sous forme d'air, et en aval dans le second étage de l'unité de combustion étagée avec une quantité excédentaire d'oxygène, de préférence fournie sous forme d'air.

3. Procédé selon l'une quelconque des revendications 1 et 2, dans lequel de l'ammoniac est brûlé dans la première étape de l'unité de combustion jusqu'à une teneur résiduelle en ammoniac qui est supérieure à zéro et inférieure à 1 000 ppm, de préférence inférieure à 100 ppm, de manière plus préférée inférieure à 50 ppm.

4. Procédé selon l'une quelconque des revendications 1 à 3, dans lequel T3 est au moins 100 °C au-dessus de T2 et où T3 est jusqu'à un maximum de 1 200 °C et/ou où T3 est au moins 100 °C au-dessous de T1, plus préférablement où T3 est au moins 200 °C au-dessous de T1.

5. Procédé selon l'une quelconque des revendications 1 à 4, dans lequel la quantité sous-stœchiométrique d'oxygène utilisée dans le premier étage de l'unité de combustion est de 80 à moins de 100 % et de préférence de 90 à 99 %, mieux encore de 95 à 98 % de la quantité stœchiométrique.

6. Procédé selon l'une quelconque des revendications 1 à 5, dans lequel la combustion dans le premier étage de l'unité de combustion est effectuée à une température dans la plage de 1 500-1 800 °C.

7. Procédé selon l'une quelconque des revendications 1 à 6, dans lequel la combustion dans le second étage de l'unité de combustion est effectuée à une température dans la plage de 700-1 200 °C, de préférence dans la plage de 750-1 150 °C, plus préférablement dans la plage de 800-1 100 °C.

8. Procédé selon l'une quelconque des revendications 1 à 7, dans lequel le premier flux contenant de l'oxygène, de préférence de l'air, a une température dans la plage de 20-500 °C.

9. Procédé selon l'une quelconque des revendications 1 à 8, dans lequel le second flux contenant de l'oxygène, de préférence de l'air, a une température dans la plage de 20-500 °C.

10. Procédé selon l'une quelconque des revendications 1 à 9, dans lequel un fluide de trempe est ajouté au second étage de l'unité de combustion.

11. Appareil (1) de production d'hydrogène par reformage thermique d'ammoniac, comprenant
(i) une unité de combustion étagée (2) comportant une unité de premier étage (2A) configurée pour la combustion partielle de combustible comportant une entrée (21) de combustible et une entrée (22) pour un premier flux contenant de l'oxygène et une sortie/entrée (23) intégrée pour un premier flux de gaz de combustion, et une deuxième unité d'étage (2B) connectée à la sortie/entrée (23) intégrée et configurée pour une combustion complète du combustible comportant une entrée (24) pour un deuxième gaz contenant de l'oxygène et une sortie/entrée (25) intégrée pour un deuxième flux de gaz de combustion, et
(ii) un réacteur de craquage d'ammoniac (3) comportant une chambre catalytique (36), dans lequel le réacteur (3) est connecté à une sortie/entrée (25) de l'unité de combustion étagée et configuré pour un échange de chaleur avec le second flux de gaz de combustion de l'unité de combustion étagée, dans lequel le réacteur (3) est en outre pourvu d'une sortie (33) pour un troisième gaz de combustion après échange de chaleur, et dans lequel la chambre de catalyseur (36) est pourvue d'une entrée (31) pour un flux d'ammoniac et pourvue d'une sortie (32) pour un flux de craquage thermique comprenant de l'hydrogène, et
(iii) une unité de séparation d'hydrogène (4).

12. Appareil (1) selon la revendication 11, dans lequel l'unité de second étage (2B) comprend une entrée supplémentaire pour un fluide de trempe.

13. Appareil (1) selon la revendication 11, dans lequel le réacteur de craquage d'ammoniac (3) est sous la forme d'un réacteur du type à baïonnette, dans lequel la sortie (32) pour le flux de craquage thermique comprenant de l'hydrogène est connectée à un tuyau interne (37) qui passe à travers la chambre de catalyseur (36).

14. Appareil (1) selon l'une quelconque des revendications 11 à 12, dans lequel l'unité de séparation d'hydrogène (4) est un PSA.

15. Appareil (1) selon l'une quelconque des revendications 11 à 13, comprenant en outre une unité (5) pour éliminer des NOx.
